# EUROPÄISCHE PATENTSCHRIFT

(11) **EP 2 448 704 B1**
(45) Veröffentlichungstag und Bekanntmachung des Hinweises auf die Patenterteilung: **23.09.2020**
(21) Anmeldenummer: 10743008.4
(22) Anmeldetag: 25.06.2010
(51) Int. Cl.: B23B 51/00

(54) **TIEFLOCHBOHRER**
DEEP HOLE DRILL
FORET POUR FORAGE PROFOND

(30) Priorität: 29.06.2009 DE 102009031193; 16.09.2009 DE 202009012568 U
(43) Veröffentlichungstag der Anmeldung: 09.05.2012
(73) Patentinhaber: Botek Präzisionsbohrtechnik GmbH, 72585 Riederich (DE)
(72) Erfinder: DEEG, Jürgen, 72555 Metzingen (DE)
(74) Vertreter: Jakelski & Althoff Patentanwälte PartG mbB
(86) Internationale Anmeldenummer: PCT/DE2010/000733
(87) Internationale Veröffentlichungsnummer: WO 2011/000355

(56) Entgegenhaltungen:
- DE-U- 7 441 010
- DE-U1- 20 321 368
- DE-U1-202009 012 569
- JP-A- 10 109 210
- JP-A- 60 221 209
- JP-A- 2007 050 477
- JP-U- 3 079 214
- JP-U- 53 126 089
- US-A1- 2009 110 501

## Beschreibung

### Stand der Technik

Die Erfindung betrifft einen Tieflochbohrer nach der Gattung des unabhängigen Anspruchs 1.

Tieflochbohrer werden eingesetzt, um Bohrungen in Werkstücke einzubringen. Verschiedene Arten von Tieflochbohrern sind in der VDI-Richtlinie VDI 3210 dargestellt. Tieflochbohrer werden hauptsächlich zur Herstellung von Bohrungen mit vergleichsweise kleinem Durchmesser eingesetzt, der vorwiegend im Bereich von 0,5 mm bis 50 mm liegt, wobei die Bohrtiefe jedoch ein Vielfaches des Bohrdurchmessers betragen kann. Übliche Werte für die Bohrtiefe liegen im Bereich des 20-fachen bis 100-fachen des Bohrdurchmessers, können jedoch auch darüber oder darunter liegen.

Beim Einsatz werden Tieflochbohrer üblicherweise maschinenseitig an ihrem Einspannende in einer dafür vorgesehenen Aufnahme in einer Spindel aufgenommen und von der Spindel um die Bohrermittelachse in Rotation versetzt. Gleichzeitig wird das Werkzeug entlang seiner Mittelachse mit einem definierten Vorschub pro Umdrehung auf das Werkstück zu bewegt. Dabei dringt der Tieflochbohrer in das Werkstück ein und an seinen Schneiden wird das Material des Werkstücks abgespant und in Form von Spänen vom Werkstück abgetrennt. Die dabei entstehenden Späne werden durch ein Kühlmittel, welches durch innenliegende Kanäle über die Spindel zugeführt wird, abgekühlt und entlang von Spanabfuhrnuten aus der Bohrung ausgespült.

Es ist auch möglich, das Werkstück die Rotation und oder die Vorschubbewegung ausführen zu lassen oder Rotation und/oder Vorschubbewegung zum Teil durch das Werkzeug und zum Teil durch das Werkstück auszuführen.

Allgemein bestehen Tieflochbohrer aus einem Bohrkopf und einem Bohrerschaft mit einem Einspann-Ende. Am Bohrkopf ist zumindest eine Schneide ausgebildet, die sich von der Bohrermittelachse bis zum Bohrerumfang erstreckt. Weiterhin können am Umfang des Bohrkopfes angeordnete Führungselemente vorgesehen sein. Der Bohrkopf und der Bohrerschaft sind entweder formschlüssig miteinander verbunden oder sie sind aus einem Stück hergestellt. Vorhanden ist wenigstens ein im Bohrerschaft und Bohrkopf verlaufender Kanal, der am Bohrkopf und am Einspann-Ende Öffnungen aufweist. Durch diesen Kanal wird vom Einspann-Ende ausgehend Kühlmittel unter Druck zugeführt, das am Bohrkopf austritt und neben der Kühlung des Bohrkopfes beziehungsweise der Schneide insbesondere die Aufgabe hat, die beim Bohren entstehenden Späne durch eine im Bohrkopf und im Bohrerschaft vorhandene im Wesentlichen V-förmige Spanabfuhrnut herauszuspülen.

Weitere übliche Ausgestaltungen von Tieflochbohrern umfassen Werkzeuge mit zwei oder mehr Schneiden, die sich jeweils von der Bohrermittelachse bis zum Bohrerumfang erstrecken. Der generelle Aufbau ist ähnlich zu den Werkzeugen mit einer Schneide. Bei diesen Werkzeugen ist üblicherweise jeder Schneide ein Kanal zur Zufuhr von Kühlmittel, der sich vom Einspannende bis zur Bohrerspitze erstreckt und entsprechende Öffnungen an jedem Ende aufweist, sowie eine Nut zur Abfuhr der entstehenden Späne, die sich von der Bohrerspitze ausgehend in Richtung Einspannende erstreckt, zugeordnet. Der Querschnitt der Spanabfuhrnuten kann dabei im wesentlichen U-förmig oder V-förmig sein, kann generell aber auch andere Querschnittsformen aufweisen. Auch bei mehrschneidigen Werkzeugen können Führungselemente am Bohrkopf vorgesehen sein.

Weitere bekannte Ausgestaltungen von Tieflochbohrern, vorzugsweise mit mindestens zwei Schneiden, weisen sowohl Kanäle zur Zufuhr von Kühlmittel, als auch Nuten zur Abfuhr der Späne auf, die wendelförmig ausgeführt sind. Diese Werkzeuge werden üblicherweise als Wendelbohrer oder Wendel-Tieflochbohrer bezeichnet.

Tieflochbohrer werden vorzugsweise eingesetzt, um Bohrungen in Werkstücke einzubringen, die mit anderen Fertigungsverfahren nicht oder nicht wirtschaftlich herstellbar sind. Oft werden diese Werkstücke in großen Serien gefertigt. Verbesserungen, die zu einer Steigerung der Fertigungsgeschwindigkeit führen, sind deshalb generell wünschenswert und selbst kleine Verbesserungen führen zu signifikanten Einsparungen bei den Fertigungskosten.

Die Fertigungsgeschwindigkeit ist bei Bohrwerkzeugen durch das Produkt aus Vorschub pro Umdrehung des Werkzeuges und der Anzahl der Umdrehungen pro Minute definiert und wird allgemein als Vorschubgeschwindigkeit bezeichnet.

Eine Grenze für die Steigerung der Fertigungsgeschwindigkeit ist bei Tieflochbohrern oftmals dadurch gegeben, dass sich die Späne nicht mehr durch die Spanabfuhrnut abführen lassen und es zu einem Spänestau kommt. Wie bereits dargestellt werden die Späne mit Hilfe des zugeführten Kühlmittels ausgespült. Bei Wendelbohrern ergibt sich eine zusätzliche Förderwirkung durch die gewendelten Spanabfuhrnut. Besonders bei zähen Werkstoffen kommt es bei der Steigerung der Fertigungsgeschwindigkeit zu Spänestau, da mit höherer Fertigungsgeschwindigkeit die Späne nicht mehr brechen, sondern immer länger werden. Dadurch können die Späne in der Spanabfuhrnut stecken bleiben und nicht mehr abtransportiert werden, was zum Bruch des Werkzeuges und gleichzeitig zur Beschädigung des Werkstückes führen kann.

Es wurde deshalb auch verschiedentlich der Versuch unternommen, die Späne in ihrer Breite aufzuteilen. Hierzu wurden Spanteiler eingesetzt, wie die folgenden aus dem Stand der Technik bekannten Ausführungen zeigen.

Die in der JP 59 196108 A1 (Nippon Yakin, Spanteilerkerbe) beschriebene Schneide eines Bohrers weist gemäß einem Ausführungsbeispiel eine Kerbe auf, die als Spanteiler wirken soll. In einem anderen Ausführungsbeispiel ist eine Stufe in der geradlinigen Schneide vorgesehen, welche einen Hinterschnitt mit einem vorgegebenen Winkel aufweist.

Der in dem Gebrauchsmuster DE-G 74 41 010 (Bilz, Bohrer mit Spanteiler) beschriebene Bohrer weist zwei Schneiden auf. In beiden Schneiden sind rechteckförmige Aussparungen vorgesehen, die als Spanteiler wirken sollen. Aufgrund der rechteckförmigen Aussparungen weisen diese Spanteiler jeweils einen Hinterschnitt in Bezug auf die Bohrrichtung auf.

Bei diesen bekannten Spanteilern wird durch eine Teilung der Späne die Breite der Späne verringert, besonders bei Werkstoffen mit hoher Zähigkeit und bei hoher Vorschubrate weisen aber auch die geteilten Späne eine nicht unbeträchtliche Länge auf, wodurch wiederum die vorstehend beschriebenen Nachteile entstehen, nämlich ein Spänestau in der Spanabfuhrnut mit all den oben geschilderten Nachteilen.

Der Erfindung liegt daher die Aufgabe zugrunde, einen Tieflochbohrer zu vermitteln, der eine hohe Vorschubrate bei gleichzeitig unproblematischer Abfuhr der Späne durch die Spanabfuhrnuten ermöglicht.

Diese Aufgabe wird durch die im unabhängigen Anspruch 1 angegebenen Merkmale gelöst.

### Offenbarung der Erfindung

Grundidee der Erfindung ist es, bei einem Tieflochbohrer einen an einer Schneide zugeordneten Spanteiler vorzusehen und gleichzeitig die durch den Spanteiler entstandenen Teile der einen Schneide so anzuordnen, dass die Späne in ihrem Fluss aufeinander zu gelenkt werden. Durch die Kollision der bei der Zerspanung entstehenden Späne kommt es zu einem Eintrag von Spannungen in die Späne, was zu einem Bruch der Späne führt. Hierdurch wird eine Reduzierung der Größe sowohl hinsichtlich der Breite als auch hinsichtlich der Länge der Späne auf äußerst vorteilhafte Weise erzielt. Durch die Unterteilung der Schneide mit einem Spanteiler in Kombination mit der vorteilhaften Anordnung der Teil-Schneiden werden sehr kleine und schmale Späne bei der spanabhebenden Bearbeitung des Werkstücks erreicht, die auf besonders optimale Weise in der Spanabfuhrnut abtransportiert werden können.

Der erfindungsgemäße Tieflochbohrer ermöglicht insbesondere eine gegenüber den bekannten Tieflochbohrern wesentlich höhere Vorschubrate, die in einer industriellen Fertigung eine entsprechend höhere Fertigungsgeschwindigkeit gestattet. Hierdurch können mehr als dreifach höhere Vorschubraten als mit bekannten Tieflochbohrern erzielt werden.

Die Verbesserungen werden durch die vorteilhafte Formung der beim Bohren entstehenden Späne erreicht. Der/die Spanteiler sorgt/sorgen für eine Teilung des Spans in Längsrichtung, sodass die Spanbreite begrenzt wird. Durch die Anordnung der Teil-Schneiden und die sich dadurch ergebende Kollision der Späne wird ein Brechen der Späne erzielt und damit eine Begrenzung der Länge der Späne. Ein Abtransport der Späne ist auf diese Weise auch mit einer reduzierten Kühlmittelzufuhr gewährleistet. Hierdurch wird mit dem erfindungsgemäßen Tieflochbohrer eine hohe Prozesssicherheit erzielt. Insbesondere wird ein Bohrerbruch, der die Zerstörung des zu bohrenden Werkstücks zur Folge hätte, durch das Vermeiden einer Verstopfung der Spanabfuhrnut zuverlässig vermieden.

Der erfindungsgemäße Tieflochbohrer weist daher insgesamt erhebliche Vorteile beim Einsatz insbesondere in der industriellen Serienfertigung auf.

Weitere Ausgestaltungen und Weiterbildungen des erfindungsgemäßen Tieflochbohrers sind Gegenstand der abhängigen Ansprüche.

So sieht eine besonders vorteilhafte Ausgestaltung vor, dass der wenigstens eine Spanteiler als Nut realisiert ist. Alternativ kann der wenigstens eine Spanteiler als Stufe realisiert sein.

Eine vorteilhafte Ausgestaltung sieht vor, dass die Anzahl der Spanteiler in Abhängigkeit vom Durchmesser des Tieflochbohrers festgelegt ist, wobei mit zunehmendem Bohrerdurchmesser entsprechend mehrere Spanteiler vorgesehen sein können.

Eine weitere Ausgestaltung sieht vor, dass der Spanteiler einen Freischnittwinkel bezogen auf eine Parallele zur Bohrermittelache von größer 0° aufweist. Der dadurch entstehende Hinterschnitt des Spanteilers bildet gewissermaßen eine Schneidecke und erhöht die Zuverlässigkeit der Spanteilung. Eine Weiterbildung dieser Ausgestaltung sieht vor, dass der Freischnittwinkel in Abhängigkeit vom Material des zu bohrenden Werkstücks festgelegt ist. Der Freischnittwinkel liegt vorzugsweise in einem Bereich von 1° bis 60°, speziell im Bereich von 8° bis 12°.

Der oder die Spanteiler sind in/an einer Schneide des Tieflochbohrers angeordnet. Sie sind dabei so in/an der Schneide angeordnet, dass sie diese im Wesentlichen in annähernd gleich lange Abschnitte unterteilen, um so den Span in mehrere im Wesentlichen gleich breite Abschnitte zu unterteilen. Die Aufteilung erfolgt dabei insbesondere so, dass der/die Schneidkante so aufgeteilt wird, dass die längste Teil-Schneide höchstens doppelt so lang ist wie die kürzeste Teil-Schneide

Die Teil-Schneiden sind dergestalt angeordnet, dass die bei der Zerspanung entstehenden Späne unter Ausnutzung ihrer sich beim Abspanen von der Werkstückoberfläche ergebenden Flussrichtung aufeinander zu gelenkt werden und kollidieren. Durch die Kollision werden Spannungen in die Späne eingebracht, die zu einem Bruch und damit zum Abtrennen der Späne führt, wodurch die Späne in ihrer Länge begrenzt werden.

Vereinfachend wird bei der Betrachtung der Flussrichtung der Späne davon ausgegangen, dass die Flussrichtung eines Spanes einer Teil-Schneide lotrecht zur Verbindungslinie der beiden äußersten Enden der Teil-Schneide bzw. der Sehne durch das jeweils innerste und äußerste schneidende Ende jeder Teil-Schneide ist und dabei vom Werkstück weg in Richtung der Spanabfuhrnut gerichtet ist. Diese Richtung wird im Folgenden als Schneiden-Normale bezeichnet und ist für die Anordnung der Teil-Schneiden zueinander ausschlaggebend.

Als Teil-Schneiden werden dabei die Teile einer Schneide definiert, die zwischen Mittelachse des Tieflochbohrers und einem Spanteiler, zwischen zwei Spanteilern oder zwischen einem Spanteiler und dem Umfang des Bohrkopfes angeordnet sind.

Gemäß einer vorteilhaften Ausgestaltung können die Teil-Schneiden so angeordnet werden, dass die Schneiden-Normalen der Teil-Schneiden in einem Winkel von 20° bis 90° aufeinander zu gerichtet sind. Bei einer Anordnung im Bereich eines Winkels von 30° bis 70° ergibt sich eine besonders günstige Beeinflussung der Späne, die zum Spanbruch führt.

Die Teil-Schneiden selbst können dabei im Wesentlichen gerade ausgeführt sein, sie können aber ebenso verschiedene gerade oder gekrümmte Abschnitte aufweisen. Eine vorteilhafte Ausgestaltung sieht vor, dass wenigstens die an den Umfang des Bohrkopfes anschließende Teil-Schneide einen nach außen gekrümmten Umriss aufweist.

Bei einschneidigen Werkzeugen kann vorgesehen sein, dass die direkt an den Umfang des Bohrkopfes angrenzende Teil-Schneide eine nach außen gekrümmte Kontur, insbesondere einen Kreisbogen sowie eine Schneidecke am Übergang zum Umfang aufweist.

Die Anordnung des Spanteilers und die Anordnung der Teil-Schneiden zueinander ist abhängig vom zu bearbeitenden Werkstoff und seinem Umformungsvermögen, den Prozessparametern, dem verwendeten Kühlschmierstoff und anderen Faktoren festzulegen.

Gemäß einer vorteilhaften Ausgestaltung kann vorgesehen sein, dass der Tieflochbohrer aus einem Bohrkopf und einem Bohrerschaft zusammengesetzt ist oder dass der Bohrkopf und der Bohrerschaft aus einem Stück hergestellt sind. Alternativ kann ein auswechselbarer Bohrkopf vorgesehen sein.

Weitere Ausgestaltungen betreffen den Bohrkopf, der aus Hartmetall hergestellt sein kann und/oder mit einer Beschichtung, beispielsweise einer Hartstoffschicht versehen sein kann. Mit diesen Maßnahmen kann die Standzeit des Tieflochbohrers erheblich verlängert werden.

Weitere vorteilhafte Weiterbildungen und Ausgestaltungen des erfindungsgemäßen Tieflochbohrers sind Gegenstand der nachfolgenden Beschreibung.

Ausführungsbeispiele der Erfindung sind in der Zeichnung dargestellt und in der nachfolgenden Beschreibung näher erläutert.

Es zeigen:
- Fig. 1: einen Tieflochbohrer gemäß dem Stand der Technik mit einer Schneide ohne Spanteiler, üblicherweise als Einlippenbohrer bezeichnet;
- Fig. 2: einen Tieflochbohrer gemäß dem Stand der Technik mit zwei Schneiden ohne Spanteiler und in gerade genuteter Ausführung, üblicherweise als Zweilippenbohrer bezeichnet;
- Fig. 3: eine Prinzipdarstellung der Aufteilung der Schneiden in Teil-Schneiden eines erfindungsgemäßen Tieflochbohrers;
- Fig. 4: eine erste Ausgestaltung eines erfindungsgemäßen Tieflochbohrers mit einer gekrümmter Schneide und einem als Nut ausgeführten Spanteiler;
- Fig. 5: eine weitere Ausgestaltung eines erfindungsgemäßen Tieflochbohrers mit einer gekrümmter Schneide und einem als Stufe ausgeführten Spanteiler;
- Fig. 6: eine weitere Ausgestaltung eines erfindungsgemäßen Tieflochbohrers mit einer Schneide und mit im Wesentlichen geraden TeilSchneiden und einem als Nut ausgeführten Spanteiler;
- Fig. 7: eine weitere Ausgestaltung eines erfindungsgemäßen Tieflochbohrers mit einer Schneide und mit im Wesentlichen geraden Teil-Schneiden und einem als Nut ausgeführten Spanteiler;
- Fig. 8: eine Ausgestaltung eines Tieflochbohrers mit zwei Schneiden mit im Wesentlichen geraden Teil-Schneiden und als Stufen ausgeführten Spanteilern;
- Fig. 9: eine vergrößerte Darstellung des Spanteilers, als Nut ausgeführt, mit Darstellung des Freischnittwinkels w1.

### Beschreibung von Ausführungsbeispielen

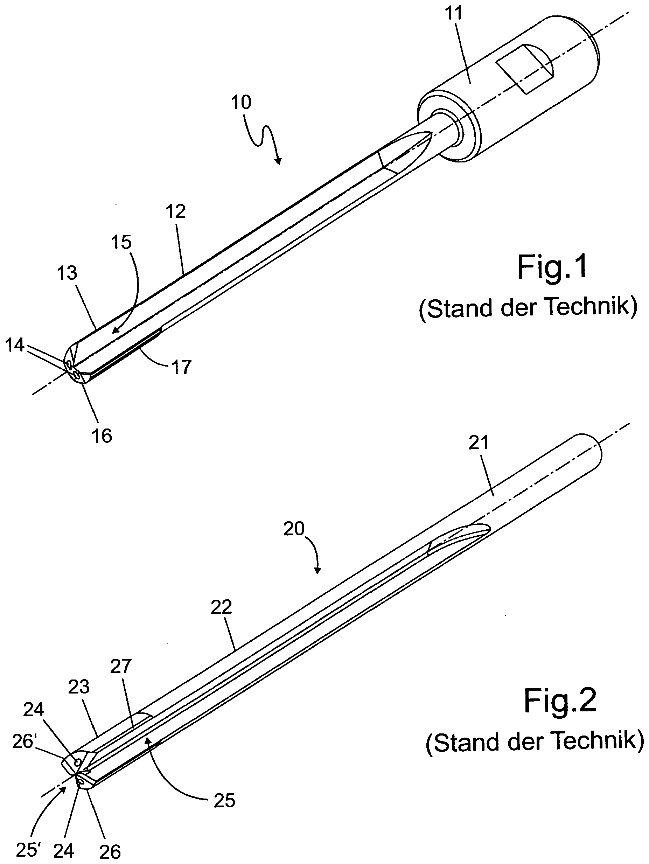

Figur 1 zeigt einen Tieflochbohrer 10 mit einer Schneide 16, wie er aus dem Stand der Technik bekannt ist. Der Tieflochbohrer 10 enthält ein EinspannEnde 11 zur Aufnahme des Tieflochbohrers 10 in ein in Figur 1 nicht näher gezeigtes Bohrfutter, und einen Bohrerschaft 12 mit einem Bohrkopf 13. Der Bohrerschaft 12 und der Bohrkopf 13 sind einstückig realisiert. Im Bohrerschaft 12 ist wenigstens ein Kühlmittelkanal 14 vorgesehen, der am vorderen Ende des Bohrkopfes 13 mündet. Das durch den Kühlmittelkanal 14 gepumpte Kühlmittel hat nicht nur die Aufgabe, den Bohrkopf 13 zu kühlen, sondern dient auch zum Abtransport der beim Bohren entstehenden Späne durch eine V-förmige Spanabfuhrnut 15, die an der Schneide 16 des Tieflochbohrers 10 beginnt und sich nahezu über die gesamte Länge des Bohrerschafts 12 erstreckt. Am Umfang des Bohrkopfes 13 kann wenigstens ein Führungselement 17 vorgesehen sein.

Figur 2 zeigt einen Tieflochbohrer 20 mit zwei Schneiden 26, 26', wie er aus dem Stand der Technik bekannt ist. Der Tieflochbohrer enthält ein Einspann-Ende 21 zur Aufnahme des Tieflochbohrers 20 in ein in Figur 2 nicht näher gezeigtes Bohrfutter, und einen Bohrerschaft 22 mit einem Bohrkopf 23. Der Bohrerschaft 22 und der Bohrkopf 23 sind einstückig realisiert. Im Bohrerschaft 22 sind wenigstens zwei Kühlmittelkanäle 24 vorgesehen, die am vorderen Ende des Bohrkopfes 23 münden. Das durch die Kühlmittelkanäle 24 gepumpte Kühlmittel hat nicht nur die Aufgabe, den Bohrkopf 23 zu kühlen, sondern dient auch zum Abtransport der beim Bohren entstehenden Späne durch die V-förmigen Spanabfuhrnuten 25, 25', die jeweils an einer Schneide 26, 26' des Tieflochbohrers beginnen und sich nahezu über die gesamte Länge des Bohrerschafts erstrecken. Am Umfang des Bohrkopfes 23 kann wenigstens ein Führungselement 27 vorgesehen sein.

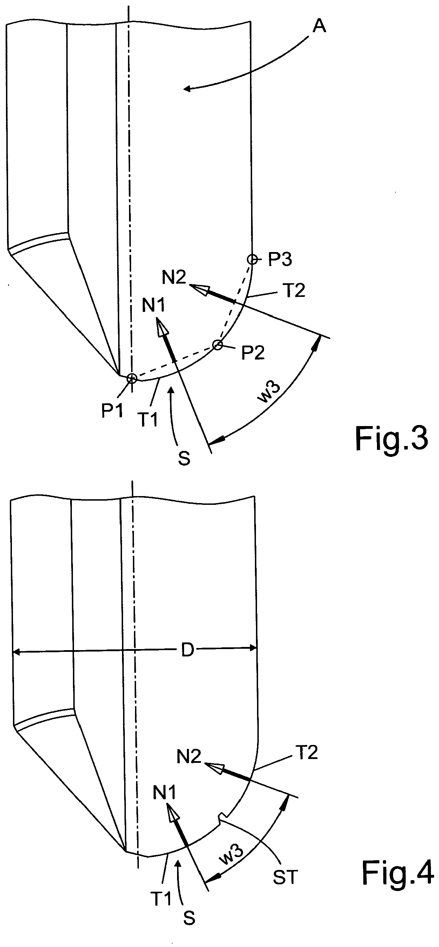

In Figur 3 ist der Schneidenbereich eines von der Erfindung Gebrauch machenden Tieflochbohrers dargestellt mit einer Schneide S, die sich von einem Punkt P1 an der Mittelachse bis zu einem Punkt P3 am Durchmesser (Umfang) des Tieflochbohrers erstreckt und die in einem Punkt P2 durch einen Spanteiler (nicht dargestellt) in zwei Teil-Schneiden unterteilt wird. Eine Teil-Schneide T1 erstreckt sich ausgehend vom Punkt P1 bis zu dem Punkt P2, eine andere Teil-Schneide T2 erstreckt sich von dem Punkt P2 bis zu dem Punkt P3. Die Schneiden-Normale N1 der Teil-Schneide T1 verläuft lotrecht zur Verbindungslinie P1-P2, die Schneiden-Normale N2 der Teil-Schneide T2 verläuft lotrecht zur Verbindungslinie P2-P3. Die Schneiden-Normalen sind jeweils vom Werkstück weg in Richtung der Spanabfuhrnut A gerichtet und schließen einen Winkel w3 miteinander ein.

In den Figuren 4 bis 6 sind weitere Ausführungsformen des erfindungsgemäßen Tieflochbohrers dargestellt, wobei hier gleiche Elemente mit den gleichen Bezugszeichen wie in Figur 3 bezeichnet sind. Bei dem in Figur 4 dargestellten Tieflochbohrer ist eine gekrümmte Schneide S vorgesehen mit einem darin angeordneten Schneidenteiler ST, der als Nut ausgebildet ist.

Sämtliche dargestellten Tieflochbohrer weisen einen Durchmesser D auf, der dem Bohrdurchmesser entspricht.

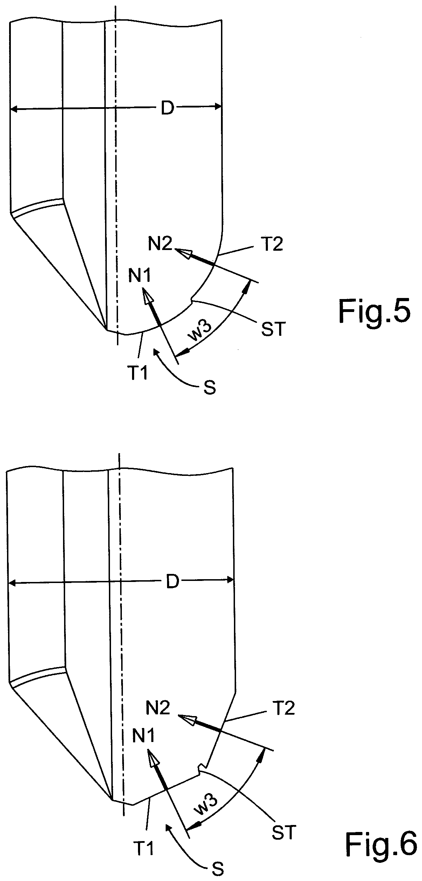

Bei dem in Figur 5 dargestellten Tieflochbohrer ist eine gekrümmte Schneide S mit einem als Stufe ausgebildeten Schneidenteiler ST vorgesehen.

Der in Figur 6 dargestellte Tieflochbohrer weist eine Schneide S mit im Wesentlichen geraden Teil-Schneiden T1 und T2 auf, zwischen denen ein als Nut ausgeführter Spanteiler ST angeordnet ist.

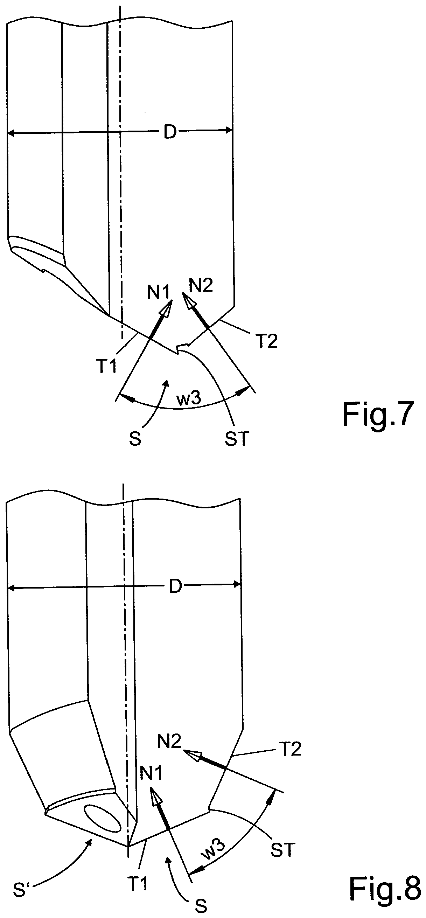

Der in Figur 7 dargestellte Tieflochbohrer weist eine Schneide S mit im Wesentlichen geraden Teil-Schneiden T1 und T2 und einem als Nut ausgeführten Spanteiler ST auf. Die Schneiden-Normale N1 weist von der Mittelachse weg, die Schneiden-Normale N2 weist zur Mittelachse hin. Mit dieser Anordnung der Teil-Schneiden T1, T2 kann eine besonders einfache Herstellung des Tieflochbohrers erzielt werden, da die generelle Anordnung der Teil-Schneiden T1, T2 einem bekannten Standard-Anschliff entspricht. Durch den großen Winkel w3 der Schneiden-Normalen N1, N2 zueinander wird ein besonders günstiger Spanbruch erzielt.

Der in Figur 8 dargestellte Tieflochbohrer weist zwei Schneiden S, S' mit im Wesentlichen geraden Teil-Schneiden T1, T2 und einem als Stufe ausgeführten Spanteiler ST auf. Die beiden Schneiden T1, T2 sind symmetrisch zur Mittelachse angeordnet.

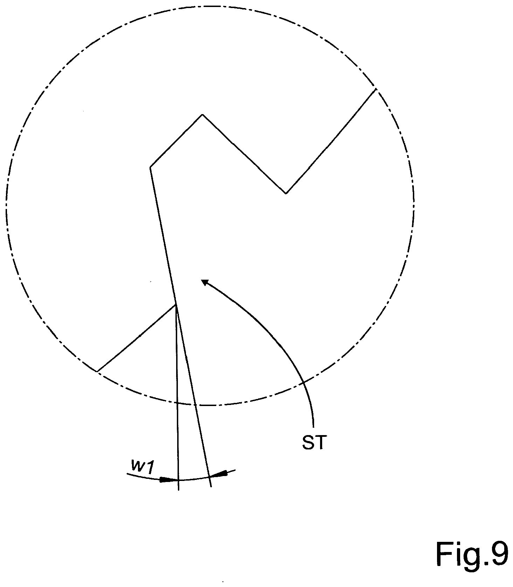

In Figur 9 ist eine vergrößerte Darstellung des Spanteilers ST eines Tieflochbohrers gezeigt, die als Nut ausgeführt ist. Ein Freischnittwinkel w1 größer als 0° sorgt für eine sichere Teilung des Spanes auch bei sehr zähen Werkstoffen.

## Patentansprüche

1. Tieflochbohrer mit genau einer an einem Bohrkopf ausgebildeten Schneide (S), die eine Schneidkante aufweist, wobei die Schneide (S) durch wenigstens einen Spanteiler (ST) zum Teilen der durch die Schneidkante abgespanten Späne in wenigstens zwei Teil-Schneiden (T1, T2) unterteilt ist, **dadurch gekennzeichnet, dass** die Schneide (S) sich von der Mittelachse bis zum Umfang erstreckt, und wobei die Teil-Schneiden (T1, T2) der Schneide (S) so zueinander angeordnet sind, dass die Schneiden-Normalen (N1, N2) von mindestens zwei Teil-Schneiden (T1, T2) in einem Winkel (w3) von wenigstens 20° zueinander ausgerichtet sind.

2. Tieflochbohrer nach Anspruch 1, **dadurch gekennzeichnet, dass** wenigstens die direkt an den Umfang des Tieflochbohrers angrenzende Teil-Schneide (T2) einen nach außen gekrümmten Umriss aufweist.

3. Tieflochbohrer nach Anspruch 2, **dadurch gekennzeichnet, dass** die direkt an den Umfang des Tieflochbohrers angrenzende Teil-Schneide (T2) eine Schneidecke am Übergang zum Umfang des Bohrkopfes aufweist.

4. Tieflochbohrer nach Anspruch 1, **dadurch gekennzeichnet, dass** der wenigstens eine Spanteiler (ST) als Nut realisiert ist.

5. Tieflochbohrer nach Anspruch 1, **dadurch gekennzeichnet, dass** der wenigstens eine Spanteiler (ST) als Stufe realisiert ist.

6. Tieflochbohrer nach Anspruch 1, **dadurch gekennzeichnet, dass** die Anzahl der Spanteiler (ST) in Abhängigkeit vom Bohrdurchmesser (D) festgelegt ist.

7. Tieflochbohrer nach einem der vorstehenden Ansprüche, **dadurch gekennzeichnet, dass** der/die Spanteiler (ST) die Schneidkante in annähernd gleich lange Bereiche unterteilt.

8. Tieflochbohrer nach einem der vorstehenden Ansprüche, **dadurch gekennzeichnet, dass** der/die Spanteiler (ST) die Schneidkante so aufteilen, dass die längste Teil-Schneide höchstens doppelt so lang ist wie die kürzeste Teil-Schneide.

9. Tieflochbohrer nach Anspruch 1, **dadurch gekennzeichnet, dass** die Schneiden-Normalen (N1, N2) von mindestens zwei Teil-Schneiden (T1, T2) in einem Winkel (w3) von 30° bis 70° zueinander gerichtet sind

10. Tieflochbohrer nach Anspruch 1, **dadurch gekennzeichnet, dass** der Spanteiler (ST) einen Spanteiler-Freischnittwinkel (w1) bezogen auf die Bohrermittelachse von größer als 0° aufweist.

11. Tieflochbohrer nach Anspruch 1, **dadurch gekennzeichnet, dass** der Tieflochbohrer einen Bohrkopf und einen Bohrerschaft aufweist und dass der Bohrkopf sowie der Bohrerschaft aus einem Stück hergestellt sind.

12. Tieflochbohrer nach Anspruch 1, **dadurch gekennzeichnet, dass** der Tieflochbohrer aus einem Bohrkopf und einem Bohrerschaft zusammengesetzt ist.

13. Tieflochbohrer nach Anspruch 12, **dadurch gekennzeichnet, dass** der Bohrkopf auswechselbar ist.

14. Tieflochbohrer nach einem der vorstehenden Ansprüche, **dadurch gekennzeichnet, dass** zumindest der Bohrkopf aus einem verschleißbeständigen Material, insbesondere Hartmetall, hergestellt ist.

15. Tieflochbohrer nach einem der vorstehenden Ansprüche, **dadurch gekennzeichnet, dass** zumindest der Bohrkopf wenigstens teilweise mit einer Beschichtung versehen ist.

## Claims

1. A deep hole drill, comprising exactly one cutter (S) which is arranged on a drill head and which comprises one cutting edge, with the cutter (S) being subdivided into at least two sub-cutters (T1, T2) by at least one chip splitter (ST) for dividing the chips removed by the cutting edge, **characterized in that** the cutter (S) extends from the central axis to the circumference and wherein the sub-cutters (T1, T2) of the cutter (S) are arranged relative to each other in such a way that the cutter normals (N1, N2) of at least two sub-cutters (T1, T2) are aligned at an angle (w3) of at least 20° to each other.

2. A deep hole drill according to claim 1, **characterized in that** at least the sub-cutter (T2) which is directly adjacent to the circumference of the deep hole drill has an outwardly curved contour.

3. A deep hole drill according to claim 2, **characterized in that** the sub-cutter (T2) which is directly adjacent to the circumference of the deep hole drill comprises a cutting corner at the transition to the circumference of the drill head.

4. A deep hole drill according to claim 1, **characterized in that** the at least one chip splitter (ST) is realized as a groove.

5. A deep hole drill according to claim 1, **characterized in that** the at least one chip splitter (ST) is realized as a step.

6. A deep hole drill according to claim 1, **characterized in that** the number of the chip splitters (ST) is determined depending on the drilling diameter (D).

7. A deep hole drill according to one of the preceding claims, **characterized in that** the chip splitter(s) (ST) subdivide(s) the cutting edge into approximately equally long areas.

8. A deep hole drill according to one of the preceding claims, **characterized in that** the chip splitter(s) (ST) subdivide(s) the cutting edge in such a way that the longest sub-cutter is maximally twice as long as the shortest sub-cutter.

9. A deep hole drill according to claim 1, **characterized in that** the cutter normals (N1, N2) of at least two sub-cutters (T1, T2) are aligned at an angle (w3) of 30° to 70° to each other.

10. A deep hole drill according to claim 1, **characterized in that** the chip splitter (ST) has a chip-splitter clearance angle (w1) of larger than 0° with respect to the central axis of the drill.

11. A deep hole drill according to claim 1, **characterized in that** the deep hole drill comprises a drill head and a drill shank, and that the drill head and the drill shank are produced in an integral way.

12. A deep hole drill according to claim 1, **characterized in that** the deep hole drill is composed of a drill head and a drill shank.

13. A deep hole drill according to claim 12, **characterized in that** the drill head is exchangeable.

14. A deep hole drill according to one of the preceding claims, **characterized in that** the at least one drill head is made from a wear-proof material, especially hard metal.

15. A deep hole drill according to one of the preceding claims, **characterized in that** at least the drill head is provided at least partly with a coating.

## Revendications

1. Foret pour perçage profond disposant d'un seul lame (S) formé sur une tête de perçage et présentant une arête de coupe, ledit lame (S) étant subdivisé en au moins deux lames partiels (T1, T2) par au moins un brise-copeaux (ST) destiné à briser les copeaux créés par l'arête de coupe, **caractérisé en ce que** le lame (S) s'étend de l'axe central jusqu'au pourtour ; lesdits lames partiels (T1, T2) du lame (S) étant agencés l'un par rapport à l'autre de manière que les normales aux lames (N1, N2) d'au moins deux lames partiels (T1, T2) soient orientées de façon à former entre elles un angle (w3) d'au moins 20°.

2. Foret pour perçage profond selon la revendication 1, **caractérisé en ce qu'**au moins le lame partiel (T2) jouxtant directement le pourtour du foret présente un contour courbé vers l' extérieur.

3. Foret pour perçage profond selon la revendication 2, **caractérisé en ce que** le lame partiel (T2) jouxtant directement le pourtour du foret présente un coin de coupe à la jonction avec le pourtour de la tête de perçage.

4. Foret pour perçage profond selon la revendication 1, **caractérisé en ce que** l'au moins un brise-copeaux (ST) consiste en une rainure.

5. Foret pour perçage profond selon la revendication 1, **caractérisé en ce que** l'au moins un brise-copeaux (ST) consiste en un gradin.

6. Foret pour perçage profond selon la revendication 1, **caractérisé en ce que** le nombre de brise-copeaux (ST) est fonction du diamètre (D) du foret.

7. Foret pour perçage profond selon l'une des revendications précédentes, **caractérisé en ce que** le ou les brise-copeaux (ST) subdivisent l'arête de coupe en des segments de longueur approximativement égale.

8. Foret pour perçage profond selon l'une des revendications précédentes, **caractérisé en ce que** le ou les brise-copeaux (ST) subdivisent l'arête de coupe de façon que le lame partiel le plus long ne fasse pas plus de deux fois la longueur du lame partiel le plus court.

9. Foret pour perçage profond selon la revendication 1, **caractérisé en ce que** les normales aux lames (N1, N2) d'au moins deux lames partiels (T1, T2) sont orientées de façon à former entre elles un angle (w3) de 30° à 70°.

10. Foret pour perçage profond selon la revendication 1, **caractérisé en ce que** le brise-copeaux (ST) présente un angle de dépouille (w1), par rapport à l'axe central du foret, qui est supérieur à 0°.

11. Foret pour perçage profond selon la revendication 1, **caractérisé en ce qu'**il présente une tête de perçage et une tige de foret et **en ce que** la tête de perçage et la tige de foret sont fabriquées d'un seul tenant.

12. Foret pour perçage profond selon la revendication 1, **caractérisé en ce qu'**il est composé d'une tête de perçage et d'une tige de foret.

13. Foret pour perçage profond selon la revendication 12, **caractérisé en ce que** la tête de perçage est échangeable.

14. Foret pour perçage profond selon l'une des revendications précédentes, **caractérisé en ce qu'**au moins la tête de perçage est fabriquée en une matière résistant à l'usure, en particulier en carbure.

15. Foret pour perçage profond selon l'une des revendications précédentes, **caractérisé en ce qu'**au moins la tête de perçage est dotée au moins partiellement d'un revêtement.
